# FASCICULE DE BREVET EUROPEEN

(11) **EP 4 477 987 B1**
(45) Date de publication et mention de la délivrance du brevet: **08.10.2025**
(21) Numéro de dépôt: 24179104.5
(22) Date de dépôt: 30.05.2024
(51) Int. Cl.: F42B 7/08

(54) **BOURRE POUR CARTOUCHE À GRENAILLES OU À BALLE, CARTOUCHE À GRENAILLES OU À BALLE COMPRENANT UNE TELLE BOURRE, ET PROCÉDÉS DE FABRICATION DE LADITE BOURRE ET DE LADITE CARTOUCHE**
FLOCKEN FÜR EINE KUGEL- ODER KUGELPATRONE, STRAHL- ODER KUGELPATRONE MIT SOLCH EINEM PFROPFEN UND VERFAHREN ZUR HERSTELLUNG DAVON
WAD FOR SHOT OR BULLET CARTRIDGE, SHOT OR BULLET CARTRIDGE COMPRISING SUCH A WAD, AND METHODS FOR PRODUCING SAID WAD AND BULLET CARTRIDGE

(30) Priorité: 15.06.2023 FR 2306118
(43) Date de publication de la demande: 18.12.2024
(73) Titulaire: Decathlon, 59650 Villeneuve d'Ascq (FR)
(72) Inventeur: DUBORPER, Clément, 59650 VILLENEUVE D'ASCQ (FR)
(74) Mandataire: Cabinet Beau de Loménie

(56) Documents cités:
- EP-A1- 0 880 006
- EP-A1- 3 601 937
- FR-A1- 3 040 389
- GB-A- 2 332 204
- US-A- 5 859 090
- US-A1- 2018 274 890
- US-A1- 2021 140 747

## Description

### Domaine Technique

La présente invention concerne le domaine technique des bourres pour cartouches à grenailles ou à balle en partie ou totalement biodégradables, en particulier utilisées pour les armes à grenailles ou à balle, par exemple utilisées pour la pratique de la chasse ou le tir de loisir.

La présente invention concerne également le domaine technique des cartouches à grenailles ou à balle comprenant de telles bourres.

La présente invention concerne également les procédés de fabrication de bourres pour cartouche à grenailles ou à balle en partie ou totalement biodégradables, et des cartouches à grenailles ou à balle comprenant de telles bourres.

### Technique antérieure

Une bourre pour cartouche est généralement logée dans le volume intérieur de la douille d'une cartouche à grenailles ou à balle par exemple et sépare le(s) projectile(s), par exemple les grenailles ou les plombs ou la balle, de la poudre propulsive.

Lors d'un tir, la bourre transmet au(x) projectile(s) l'énergie induite par la poussée des gaz de combustion de la poudre propulsive. La bourre doit ainsi assurer une poussée efficace, et régulière, et ce de manière reproductible.

La bourre a, parmi ses différentes fonctions, une fonction de piston, et subit une pression très importante lors d'un tir, par exemple pouvant atteindre plus de 1000 bars, sur quelques centaines de microsecondes.

La bourre ne doit donc pas casser/se fissurer dans la lumière de l'arme à feu afin d'éviter d'obstruer ladite lumière. Pour des raisons de sécurité, il est ainsi recherché que la bourre reste intacte lors du tir, et après le tir lors de son trajet dans la lumière (ou le canon) de l'arme et après son expulsion de l'arme. Une casse prématurée de la bourre engendre des fuites de gaz et donc une perte de la pression de poussée.

Lors d'un tir, la bourre est donc libérée dans l'environnement, parfois en plusieurs débris éparpillés. Il est donc recherché des matériaux aptes à se dégrader dans l'environnement sous l'effet des micro-organismes et/ou de basses températures, par exemple à des températures inférieures ou égales à environ 30°C-40°C, et/ou de l'eau.

Il est également recherché que ces matériaux puissent garantir les performances balistiques assurées pour une bourre classique non biodégradable, et soient suffisamment résistants pour garantir le respect des normes de sécurité des utilisateurs. On connait les documents suivants décrivant des bourres biodégradables. US 2021/140747 A1 décrit une bourre biodégradable.

EP 3.601.937 A1 décrit une bourre en deux pièces, la première pièce recevant la poudre propulsive et la seconde pièce recevant le(s) projectile(s). Les première et seconde pièces sont dans des polyesters biodégradables différents dans les exemples, la première pièce comprend du PBSA et la seconde pièce comprend du PHA. La bourre étant dans deux pièces distinctes cela implique un procédé de fabrication avec plusieurs étapes, et donc plus long et onéreux.

EP 3 290 858 B1 décrit également une bourre comprenant un polyester biodégradable, tel que le PLA, éventuellement en mélange avec un élastomère biodégradable, tel que le polycaprolactone ou le PBS, avec du carbonate de calcium. La fraction massique en carbonate de calcium est faible et décrite comme étant au maximum de 5%.

Les polymères à base d'acide lactique ne donnent pas satisfaction car ils sont difficiles à mettre en œuvre par un procédé de transformation des plastiques (par exemple par injection). De plus, les bourres obtenues cassent facilement.

EP 1 877 721 A1 décrit une bourre obtenue par injection d'un mélange comprenant de 50% à 67% en masse de PVA, de 20% à 30% d'une charge, par exemple de carbonate de calcium, de 15% à 17% d'un plastifiant à base de glycérine et de propylène glycol, et de 1% à 2% d'un liant.

Cependant, les bourres biodégradables de l'état de la technique ne donnent pas satisfaction et rencontrent de nombreux problèmes.

De nombreuses bourres sont dans des polymères biodégradables qui sont hydrosolubles (par exemple le PVA ou PHA) et donc sensibles à l'humidité. Leurs propriétés peuvent ainsi être altérées dans les conditions de stockage usuelles des bourres pour cartouches. Les bourres dans des polymères biodégradables sensibles à l'humidité doivent ainsi être fabriquées dans des conditions d'humidité particulières, puis ensachées dans un sachet imperméable à l'eau après leur fabrication. Les sachets imperméables à l'eau augmentent la quantité de matière plastique utilisée. De plus, le procédé de fabrication est plus coûteux et complexe à mettre en œuvre puisqu'il faut maîtriser le taux d'humidité et investir dans des machines d'ensachage. Il existe également des bourres biodégradables non plastiques à base de matière cellulosique, telle que le carton. Néanmoins, le carton est également sensible à l'humidité, les propriétés de la cellulose peuvent ainsi se dégrader lors du stockage. De plus, il est nécessaire d'investir dans des machines spécifiques pour la fabrication de telles bourres en carton.

Enfin, les bourres biodégradables fabriquées à partir de polymères biodégradables n'offrent pas des performances mécaniques satisfaisantes, par exemple elles se cassent/se fissurent lors d'un tir, et n'assurent donc pas correctement leur fonction de piston. Les tirs ne sont en outre pas réguliers.

La mise en œuvre des polymères biodégradables dans des procédés de transformation des plastiques pour la fabrication spécifique de bourres est également complexe avec des temps de transformation (par exemple des temps d'injection) importants.

De plus, les polymères biodégradables sont en contact pendant une durée prolongée avec le(s) projectile(s) et ne doivent donc pas impacter négativement les propriétés balistiques du ou des projectile(s).

Enfin, certains polymères biodégradables sont trop onéreux pour pouvoir être utilisés de manière rentable dans des bourres pour cartouches.

La présente invention vise ainsi à proposer des bourres pour cartouche à grenailles ou à balle dont le procédé de fabrication est simplifié, facilement stockable pendant une durée importante (par exemple de 6 mois à 2 ans environ) sans perte de leurs propriétés, assurant des tirs réguliers et de bonnes performances mécaniques, à faible coût, et enfin biodégradables dans des conditions spécifiques, c'est-à-dire à basses températures et/sous l'effet des micro-organismes présents dans l'environnement tout en limitant son impact sur ce dernier.

### Exposé de l'invention

La présente invention a pour objet une bourre suivant la revendication indépendante 1.

Avantageusement, la bourre selon l'invention satisfait les critères énoncés dans les normes édictées par la CIP (Commission Internationale Permanente pour l'Epreuve des Armes à Feu Portatives), et biodégradable au moins en partie, et présente de bonnes performances au tir : écart type sur la vitesse de tir de l'ordre de 6 m/s, écart sur la pression mesurée lors du tir d'environ 60 bars, et vitesse régulière lors d'un tir mesurée comme au moins de 410 m/s.

De plus, la bourre selon l'invention ne nécessite pas de stockage dans des conditions particulières d'humidité, et donc d'ensachage pour conserver ses propriétés.

Avantageusement, la durée du cycle d'injection - moulage de la bourre selon l'invention est réduite, ce qui améliore la productivité du procédé de fabrication de ladite bourre.

Les inventeurs ont ainsi trouvé de manière surprenante que la combinaison de carbonate de calcium, présent à au moins 6,5% en masse, dans la bourre, avec du polybutylène succinate présent majoritairement parmi le(s) polymère(s), en particulier représentant au moins 70% en masse de la bourre, permet de réduire le temps d'injection de la bourre d'au moins 30%, et d'améliorer la régularité des tirs en termes de réduction des écarts type de vitesse et de pression mesurées lors des tirs d'essais.

Lorsque la fraction massique en carbonate de calcium dépasse 30%, les écarts types de vitesse et de pression augmentent, la régularité des tirs se détériore ainsi d'environ 10%.

Lorsque la fraction massique en carbonate de calcium est inférieure à 6,5%, on n'observe pas d'amélioration de la réduction des écarts types de vitesse et de pression comparativement à une bourre témoin sans carbonate de calcium.

Avantageusement, la bourre selon l'invention est biodégradable dans l'environnement sous l'effet des micro-organismes et à température ambiante.

Les tests de biodégradation effectués sur la bourre selon l'invention lors d'un enfouissement dans la terre montrent une biodégradation d'au moins 90% après plus de 150 jours, et sous l'effet de l'eau montrent une biodégradation d'au moins 90% après plus de 84 jours.

Dans un mode de réalisation, au moins 50% en masse de la bourre est biodégradable, encore de préférence au moins 60% ou au moins 70% en masse, ou au moins 80% en en masse de la bourre est biodégradable, encore de préférence au moins 90% en masse de la bourre est biodégradable.

De préférence, le ou les polymère(s) que comprend la bourre est/sont biodégradable(s), en particulier le polybutylène succinate est biodégradable.

Avantageusement, le polybutylène succinate est un polyester aliphatique biodégradable. Avantageusement, le poly(butylène succinate) (PBS), également appelé poly(tétraméthylène succinate), est un polymère thermoplastique formé par polymérisation d'acide succinique, ou d'au moins un diester d'acide succinique, tel que le succinate de diméthyle, avec le 1,4-butanediol.

Avantageusement, le carbonate de calcium est biodégradable.

Le carbonate de calcium (CaCO₃) est avantageusement composé d'ions carbonate (CO₃²⁻) et d'ions calcium (Ca²⁺).

La biodégradabilité, en particulier dans la terre en conditions aérobies, peut être mesurée à l'aide des normes suivantes :
- ISO 17556 intitulée « Plastics- Détermination of the ultimate aerobic biodegradability in soil by measuring the oxygen demand in a respirometer or the amount of carbon dioxide released", datant de 2019;
- ISO 11266 intitulée "Soil quality - Guidance on laboratory testing for biodegradation of organic chemicals in soil under aerobic conditions", datant de 1994;
- ASTM D5988 intitulée 'Standard Test Method for Determining the Aerobic Biodegradation of Plastic Materials in Soil", datant de 2018.

La biodégradabilité dans la terre en conditions aérobies est de préférence mesurée à l'aide de la norme ISO 17556 citée ci-dessus, et datant de 2019. De préférence, les conditions de test sont les suivantes : l'article témoin est de la cellulose en poudre, la bourre testée est réduite en taille (broyage cryogénique) ; la température d'incubation est conservée à 25°C +/-2°C et le test dure 4 mois. La durée du test peut être augmentée selon le but visé. La biodégradabilité dans un milieu aqueux est de préférence déterminée à l'aide de la norme ISO 14851 intitulée «Determination of the ultimate aerobic biodegradability of plastic materials in an aqueous medium - Method by measuring the oxygen demand in a closed respirometer», datant de 2019.

La biodégradabilité de la bourre ou d'un polymère ou de manière générale de tout composant mis en œuvre dans la bourre selon l'invention peut être déterminée par la norme ISO 14851, datant de 2019, ou par la norme ISO 17556, datant de 2019.

La poudre propulsive est sous forme de particules solides, par exemple est une poudre propulsive paillettes ou une poudre propulsive tubulaire.

De préférence, la première partie est en forme de coupe allongée.

De préférence, la seconde partie est en forme de coupe.

Avantageusement, l'extrémité ouverte de la première partie débouche directement dans le premier logement, et l'extrémité ouverte de la seconde partie débouche directement dans le second logement.

Avantageusement, la première partie a une forme générale sensiblement cylindrique.

Avantageusement, la seconde partie a une forme générale sensiblement cylindrique.

Avantageusement, le premier logement comprend une extrémité ouverte et un fond.

Avantageusement, le second logement comprend une extrémité ouverte et un fond.

Avantageusement, le fond du second logement est sensiblement en regard du fond du premier logement.

Avantageusement, la bourre comprend un axe longitudinal L, et les première et seconde parties s'étendent le long de l'axe longitudinal.

Avantageusement, la bourre est constituée des première et seconde parties, et d'une paroi de séparation séparant lesdites première et seconde parties.

Avantageusement, le fond de la première partie et le fond de la seconde partie sont séparés par une paroi de séparation, en particulier ayant une épaisseur supérieure ou égale à 2,00 mm. Plus particulièrement, la paroi de séparation est pleine.

Avantageusement, les première et seconde parties sont alignées selon l'axe longitudinal de la bourre.

Avantageusement, l'axe de symétrie centrale de la première partie est confondu avec l'axe de symétrie centrale de la seconde partie, l'axe de symétrie centrale étant parallèle à l'axe longitudinal de la bourre.

Avantageusement, la bourre est une pièce plastique monobloc et est donc obtenu par moulage à chaud d'un mélange plastique, en particulier comprenant un ou des polymère(s) en mélange avec au moins du carbonate de calcium, par exemple par injection (moulage).

Avantageusement, la bourre est une pièce plastique d'un seul tenant.

Avantageusement, le procédé de fabrication de la bourre est simple et donc la bourre peu onéreuse. De plus, il n'y pas de problème de résistance à la délamination entre deux parties de la bourre qui seraient solidarisées entre-elles.

Avantageusement, la bourre ne comprend pas d'autre pièce.

### Définitions

On comprend dans le présent texte par biodégradable tout matériau (par exemple : la bourre, un polymère biodégradable...) apte à se dégrader/se décomposer dans un environnement naturel (par exemple : la forêt) sous l'effet des micro-organismes (bactéries, champignons, algues,...) et/ou de la chaleur ambiante, éventuellement en combinaison avec l'eau. Avantageusement, le résultat de cette décomposition est la formation d'eau, de CO2 et/ou de méthane et éventuellement de sous-produits (résidus, nouvelle biomasse,...) non néfastes pour l'environnement.

On comprend dans le présent texte par « polymère » tout homopolymère ou copolymère constitué d'au moins deux monomères différents.

On comprend dans le présent texte par «au moins en partie biodégradable» que la bourre est biodégradable totalement ou partiellement.

On comprend dans le présent texte par la valeur Dx que x% en masse des particules (en particulier de la poudre) de carbonate de calcium (éventuellement traité en surface) ont une taille inférieure à la valeur Dx, et que (100-x)% en masse de ces particules ont une taille supérieure à ladite valeur. La taille des particules est de préférence déterminée au moyen d'un granulomètre laser Mastersize 2000 (Malvern Instrument).

On comprend par polymère(s) de polybutylène succinate que la bourre ou le mélange i) du procédé de fabrication de la bourre peut comprendre un polymère de polybutylène succinate ou plusieurs polymères de polybutylène succinate différents.

On comprend dans le présent texte par « carbonate de calcium traité en surface » que les particules de carbonate de calcium ont été traitées en surface avec un mélange déterminé, en particulier à base d'acide(s) tel que décrit dans le présent texte.

On comprend dans le présent texte par un polymère de polybutylène succinate est majoritaire en masse dans la bourre que la fraction massique de ce polymère de polybutylène succinate dans la bourre est la fraction massique la plus élevée par rapport aux fractions massiques des autres composants constituants la bourre.

On comprend dans le présent texte par des polymères de polybutylène succinate sont majoritaires en masse dans la bourre que la fraction massique de ces polymères de polybutylène succinate dans la bourre est la fraction massique la plus élevée par rapport aux fractions massiques des autres composants constituants la bourre.

On comprend dans le présent texte par projectile(s), les grenailles ou plombs ou encore une balle.

On comprend dans le présent texte par pièce plastique que ladite pièce est à base d'un ou plusieur(s) polymère(s) thermoplastique(s), c'est dire ce ou ces polymère(s) représente(nt) au moins 50% en masse, de préférence au moins 60% ou 70% en masse, de ladite pièce plastique.

On calcul la fraction massique d'un ou plusieur(s) composant(s) (par ex. polymère ou carbonate de calcium) dans ladite bourre comme étant le rapport de la masse du ou desdits composant(s) sur la masse totale de ladite bourre multiplié par 100.

On comprend dans le présent texte par charge propulsive tout type de poudre propulsive sélectionnée en sorte que sa combustion provoque un fort dégagement de gaz dont la pression expulse la bourre de l'arme.

La bourre selon l'invention peut comprendre d'autre(s) composant(s) que le carbonate de calcium et le(s) polymère(s) de polybutylène succinate tels que un ou des pigment(s), ou encore un ou plusieurs polymère(s) (notamment de polyester) biodégradable(s) thermoplastique(s), par exemple du PLA (polymère d'acide lactique) ou du PBSA, mais dont la fraction massique est inférieure ou égale à 15%, en particulier inférieure ou égale à 10%, dans la bourre.

Dans un mode de réalisation, la fraction massique du carbonate de calcium et du polybutylène(s) succinate(s) dans la bourre est supérieure ou égale à 80%, encore de préférence supérieure ou égale à 85%, préférentiellement supérieure ou égale à 90% ou à 95%.

Dans un mode de réalisation, le ou les polymère(s) que comprend la bourre, en particulier le ou les polymère(s) de polybutylène succinate que comprend la bourre, présente(nt) (notamment chacun) au moins l'une des caractéristiques choisies indépendamment parmi les caractéristiques suivantes :
- une densité (g/cm³) supérieure ou égale à 1,10 et inférieure ou égale à 1,30, en particulier supérieure ou égale à 1,20 et inférieure ou égale à 1,30, en particulier mesurée avec la norme ISO 1183 (notamment d'avril 2019); et/ou
- un Indice de Fluidité à chaud (MFR : Melt Flow Rate) mesuré à 190°C, sous une charge de 2,16 Kg, en particulier avec la norme ISO 1133 (notamment de 2011), supérieur ou égal 1 g/10min et inférieur ou égal à 10 g/10 min, en particulier supérieur ou égal à 2 g/10m min et inférieur ou égal à 6 g/10 min ; et/ou

- une température de fusion supérieure ou égale à 60°C et inférieure ou égale à 100°C, en particulier allant de 80°C à 90°C, notamment mesurée avec la norme ISO 3146 (notamment de 2022); et/ou
- un allongement à rupture mesuré avec la norme ISO 527-2 (%) (notamment de 2022) supérieur ou égal à 200%, en particulier supérieur ou égal à 250% ou supérieur ou égal à 300%, plus particulièrement supérieur ou égal à 350%, notamment inférieur ou égal à 600% ;
- un module en flexion (MPa) mesuré avec la norme ISO 178 (notamment de 2019) inférieur ou égal à 400MPa, en particulier supérieur ou égale à 100MPa, plus particulièrement inférieure ou égale à 300 MPa, encore plus particulièrement supérieure ou égale à 200 MPa ; et/ou
- une résistance à l'impact Izod à 23°C (KJ/m²) mesurée avec la norme ISO 180 (notamment de 2019) supérieure ou égale à 20 KJ/m², de préférence supérieure ou égale à 30 KJ/m² ou à 40 KJ/m², en particulier inférieur ou égal à 80 KJ/m² ; et/ou
- une dureté Rockwell (R Scale) mesurée avec la norme ISO 2039-2 (notamment de 1987) supérieure ou égale à 30 et inférieure ou égale à 100, de préférence inférieure ou égale à 80, encore de préférence inférieure ou égale à 70 et supérieure ou égale à 40.

De préférence, le carbonate de calcium est choisi par les carbonates de calcium broyés (par exemple issus du marbre, du calcaire, de dolomite et/ou de craie) et/ou les carbonates de calcium précipités (par exemple la valérite, la calcite et/ou l'aragonite) et/ou les carbonates de calcium traités par une réaction de surface (notamment désigné(s) dans le présent texte par carbonate(s) de calcium traité(s) en surface), et/ou dans les mélanges de ces derniers.

De préférence, au moins 55% en nombre des particules du carbonate de calcium ont une taille inférieure ou égale à 2 µm.

Les bourres selon l'invention doivent respecter les normes édictées par la CIP relatives à la sécurité (Commission Internationale Permanente pour l'Epreuve des Armes à Feu Portatives). Cette commission légifère, notamment en France, sur les normes de sécurité des munitions et des armes à feu.

Avantageusement, la bourre selon l'invention est adaptée à une cartouche à grenailles ou à balle.

De manière non limitative, une cartouche à grenailles ou à balle peut être utilisée avec un fusil de chasse ou de tir sportif, ou encore un fusil semi-automatique mais également dans d'autres types d'armes, telles que des armes à âme lisse ou rayée.

Avantageusement, la bourre a pour fonction de nettoyer la lumière de l'arme à feu à chaque tir, et d'assurer une poussée uniforme sur la base du/des projectile(s).

Avantageusement, la bourre est un membre intercalaire disposé entre une poudre propulsive et le(s) projectile(s).

Avantageusement, la bourre est une bourre à jupe.

Dans une variante de réalisation, le carbonate de calcium comprend, ou est, un carbonate de calcium traité en surface avec un mélange d'acide(s) (poly)carboxylique(s) et/ou d'un ou des anhydride(s) acide(s) du ou desdits acide(s) (poly)carboxylique(s), et/ou d'un ou des sel(s) du ou desdits acide(s) (poly)carboxylique(s) et/ou d'un ou des sel(s) dudit ou desdits anhydride(s) acide(s).

Dans un mode de réalisation, le carbonate de calcium comprend du, ou est un, carbonate de calcium traité en surface par au moins un anhydride succinique mono substitué et/ou au moins un acide carboxylique aliphatique, linéaire ou branché, et/ou l'un de ses sels, comprenant de 8 à 24 atomes de carbone, de préférence l'acide stéarique, encore de préférence l'acide stéarique à hauteur d'au moins 10% en masse. Par exemple, le carbonate de calcium peut être traité en surface avec de l'anhydride succinique et avec un mélange acide stéarique : acide palmitique: 1:1.

Dans une variante de réalisation, le carbonate de calcium comprend, ou est, du carbonate de calcium traité en surface, en particulier tel que décrit dans le présent texte, en mélange avec un ou plusieurs polymère(s) de support au moins en partie biodégradable(s), par exemple un ou des polyester(s) aliphatique(s), tel que le polybutylène adipate téréphtalate (PBAT), l'acide polylactique (APL) ou encore le polybutylène succinate (PBS) et leurs mélanges, en particulier en sorte de former un composé primaire à base de carbonate de calcium dans laquelle le carbonate de calcium, en particulier le carbonate de calcium traité en surface, représente au moins 65% en masse dudit composé primaire à base de carbonate de calcium et/ou le ou les polymère(s) de support représente(nt) au plus 35% en masse dudit composé primaire à base de carbonate de calcium.

En particulier, le ou les polymère(s) de support entre dans le calcul de la fraction massique en polymère(s) de ladite bourre.

Dans une variante de réalisation, la bourre comprend un composé primaire comprenant ledit carbonate de calcium, en particulier traité en surface.

De préférence, la bourre comprend au moins 10% en masse, et au plus 30% en masse dudit composé primaire.

Le composé primaire est tel que décrit dans le présent texte.

En particulier, le composé primaire comprend au moins 50%, ou au moins 60%, en masse de carbonate de calcium, en particulier traité en surface, et un ou plusieurs polymère(s) biodégradable(s), en particulier dont la fraction massique dans ledit composé primaire est supérieure ou égale à 5% et inférieure ou égale à 40%, plus particulièrement supérieure ou égale à 20% et inférieure ou égale à 40%.

Dans une variante de réalisation, le carbonate de calcium, éventuellement traité en surface, comprend, ou est, du carbonate de calcium comprenant de 40% à 70% en masse, de préférence de 50% à 60% en masse, de particules dont le D₅₀ est inférieur ou égal à 2 µm.

Dans une variante de réalisation, le carbonate de calcium, éventuellement traité en surface, comprend, ou est, du carbonate de calcium dont le D₅₀ est supérieur ou égal à 0,1 µm et inférieur ou égal 7 µm, de préférence supérieur ou égal à 0,5 µm et inférieur ou égal 4 µm.

Dans une variante de réalisation, le carbonate de calcium, éventuellement traité en surface, comprend, ou est, du carbonate de calcium dont le D₉₈ est inférieur ou égal à 50 µm, de préférence inférieure ou égale à 40 µm, encore de préférence inférieur ou égal à 15 µm.

Dans une variante de réalisation, le carbonate de calcium, éventuellement traité en surface, comprend, ou est, du carbonate de calcium dont la surface spécifique (BET) est supérieure ou égale à 0,5 et inférieure ou égale à 150 m² par gramme de carbonate de calcium.

La surface spécifique (BET) est de préférence déterminée avec la norme ISO 9277:2022 intitulée «Détermination de l'air massique (surface massique) des solides par adsorption de gaz -Méthode BET».

Dans une variante de réalisation, la fraction massique en carbonate de calcium, éventuellement traité en surface, dans la bourre est supérieure ou égale à 9,5% et inférieure ou égale à 20%, de préférence inférieure ou égale à 16,5%, en particulier est de l'ordre de 13% à +/- 3% près.

Les inventeurs ont déterminé que cet intervalle permet d'obtenir un écart-type sur la vitesse V1 lors d'un tir réduit, en particulier de l'ordre de 5-6 mètre/seconde (m/s).

Dans une variante de réalisation, la bourre est une pièce moulée par injection, en particulier le fond de la première partie de la bourre est la zone d'éjection du moule et/ou le fond de la seconde partie de la bourre est la zone du point d'injection.

Dans une variante de réalisation, la fraction massique en polymère(s), en particulier en polymère(s) de polybutylène succinate, est supérieure ou égale à 70% et inférieure ou égale à 95%, en particulier supérieure ou égale à 80% et inférieure ou égale à 95%, plus particulièrement inférieure ou égale à 90%.

Avantageusement, le ou les polymère(s) est/sont un ou des polyester(s) aliphatique(s) et/ou aromatique(s), de préférence un polyester aliphatique.

Avantageusement, le ou les polymère(s) est/sont biodégradable(s).

Dans une variante de réalisation, le polymère de polybutylène succinate représente au moins 70% en masse de la bourre, de préférence au moins 80% en masse de la bourre, encore de préférence au moins 90% en masse de la bourre.

Dans une variante de réalisation, la bourre a une densité allant de 1,20 g/cm³ à 1,50 g/cm³.

Dans une variante de réalisation, la première partie de la bourre est une jupe comprenant des fentes longitudinales, en particulier comprenant de 2 à 6 fentes longitudinales, plus particulièrement de 3 à 5 fentes longitudinales, par exemple 4 fentes longitudinales.

Avantageusement, les fentes longitudinales sont ouvertes sur l'extrémité ouverte de la première partie de la bourre.

Avantageusement, les fentes longitudinales s'étendent de l'extrémité ouverte de la première partie de la bourre, c'est-à-dire de sa partie distale, vers sa partie proximale, et s'étendent sur au moins 50% de la hauteur, en particulier sur au moins 2/3 de la hauteur, de la première partie de la bourre.

Dans une variante de réalisation, la première partie de la bourre comprend une partie proximale et une partie distale, et l'épaisseur de la paroi de la première partie est décroissante de sa partie proximale vers sa partie distale.

De préférence, la paroi de la première partie est une paroi radiale.

Dans une variante de réalisation, la seconde partie de la bourre comprend une partie proximale et une partie distale, et l'épaisseur de la paroi de la seconde partie est sensiblement constante de sa partie proximale vers sa partie distale.

De préférence, la paroi de la seconde partie est une paroi radiale.

Dans une variante de réalisation, la bourre comprend une paroi de séparation séparant un fond de la première partie de la bourre du fond de la seconde partie de la bourre, ladite paroi de séparation ayant une épaisseur supérieure ou égale à 2,00 mm.

Avantageusement, ladite paroi de séparation est pleine.

Dans une variante, la hauteur de la première partie de la bourre est supérieure ou égale à 5 fois la hauteur de la seconde partie de la bourre.

De préférence, la hauteur de la première partie de la bourre est supérieure ou égale 20 mm, encore de préférence supérieure ou égale à 30 mm, en particulier inférieure ou égale à 60 mm, par exemple de 33 mm à +/- 3 mm.

De préférence, la hauteur de la seconde partie de la bourre est supérieure ou égale 2 mm, encore de préférence supérieure ou égale à 4 mm, en particulier inférieure ou égale à 10 mm, par exemple de 5,50 mm à +/- 1 mm.

La présente invention a pour objet, selon un second aspect, une cartouche à grenailles ou à balle comprenant une bourre au moins en partie biodégradable pour cartouche à grenailles ou à balle selon l'une quelconque des variantes de réalisation en référence au premier aspect de l'invention.

La cartouche à grenailles ou à balle doit satisfaire les règles énoncées par la CIP citée ci-dessus.

La cartouche est adaptée pour une arme à grenailles ou à balle portative, à titres d'exemples non limitatifs pour les armes suivantes portatives: fusil de chasse ou de tir sportif, fusil semi-automatique, ou peuvent être utilisés dans d'autres types d'armes, telles que des armes à âme lisse ou rayée.

La présente invention a pour objet, selon un troisième aspect, un procédé de fabrication d'une bourre au moins en partie biodégradable pour cartouche à grenailles ou à balle comprenant les étapes ci-après:
- i) préparation d'un mélange comprenant un ou plusieurs polymère(s) dont un ou plusieurs polymère(s) de polybutylène succinate, et comprenant en outre un composé primaire comprenant du carbonate de calcium, la fraction massique du ou desdits polymère(s) dans ledit mélange est supérieure ou égale à 70%, la fraction massique en carbonate de calcium dans ledit mélange est supérieure ou égale à 6,5%, et le ou les polymère(s) de polybutylène succinate est, ou sont, majoritaire(s) en masse dans ledit mélange,
- ii) mise en œuvre en chauffant ledit mélange issu de l'étape i) dans une seule étape de moulage pour le moulage d'une bourre primaire pour cartouche à grenailles ou à balle avec un ensemble de moule comprenant une empreinte de bourre primaire pour cartouche à grenailles ou à balle
- iii) récupération de la bourre primaire pour cartouche moulée dans ledit mélange
- éventuellement une étape iv) de préparation d'une ou plusieurs fente(s) longitudinale(s) dans une première partie de la bourre pour cartouche,
- en particulier on récupère la bourre pour cartouche finie.

De préférence, l'étape iv) de préparation d'une ou plusieurs fente(s) longitudinale(s) comprend la découpe de la ou desdites fentes dans la première partie.

De préférence, l'étape ii) comprend le chauffage du mélange sur une extrudeuse comprenant une vis d'extrusion avec plusieurs zones de chauffage distinctes, avec une ou plusieurs zone(s) ayant une température de chauffage de préférence supérieure ou égale à 150°C et inférieure ou égale à 220°C, en particulier allant de 170°C à 200°C.

De préférence, l'étape ii) est une étape d'extrusion-moulage et/ou une étape d'injection moulage.

Dans une variante de réalisation, le ou les polybutylène(s) succinate(s) représente(nt) au moins 70% en masse dudit mélange de l'étape i), de préférence au moins 80% en masse dudit mélange de l'étape i), notamment au plus 90% en masse dudit mélange de l'étape i).

Dans une variante de réalisation, le carbonate de calcium représente au moins 6,5%, ou au moins 9,5%, en masse dudit mélange de l'étape i), de préférence au plus 20% en masse du mélange de l'étape i), encore de préférence au plus 16,5% en masse dudit mélange de l'étape i).

Dans une variante de réalisation, le carbonate de calcium du composé primaire comprend, ou est, du carbonate de calcium traité en surface avec un mélange d'acide(s) (poly)carboxylique(s) et/ou d'un ou des anhydride(s) acide(s) du ou desdits acide(s) (poly)carboxylique(s), et/ou d'un ou des sel(s) du ou desdits acide(s) (poly)carboxylique(s) et/ou d'un ou des sel(s) dudit ou desdits anhydride(s) acide(s), et le composé primaire comprend un ou plusieurs polymère(s) biodégradable(s) mélangé(s) avec ledit carbonate de calcium.

Les variantes de réalisation concernant la description du carbonate de calcium en référence au premier aspect de l'invention s'appliquent au carbonate de calcium mis en œuvre dans le procédé de fabrication de la bourre selon un troisième aspect de l'invention.

Dans une variante de réalisation, la fraction massique en carbonate de calcium, notamment traité en surface, dans le composé primaire est supérieure ou égale à 50%, de préférence supérieure ou égale à 65%, en particulier inférieure ou égale à 90%, notamment de l'ordre de 65% à +/- 5% près.

Dans une variante de réalisation, la fraction massique en polymère(s) de support au moins en partie biodégradable(s) dans le composé primaire, le ou lesdit(s) polymère(s) de support étant en mélange avec le carbonate de calcium (éventuellement traité en surface), est supérieure ou égale à 5% et inférieure ou égale à 40%, en particulier supérieure ou égale à 20%, en particulier de l'ordre de 35% à +/- 5% près.

Dans une variante de réalisation, la fraction massique en polymère(s) de support au moins en partie biodégradable(s) dans le mélange de l'étape i) est supérieure à 0%, en particulier supérieure ou égale à 3,5% près, et inférieure ou égale à 15%, en particulier inférieure ou égale à 10,5%, par exemple de l'ordre de 7,5% à +/- 3% près.

Dans une variante de réalisation, la densité volumique du composé primaire comprenant du carbonate de calcium est supérieure ou égale à 1,5 g/cm³ et inférieure ou égale à 1,8 g/cm³, notamment supérieure ou égale à 1,6 g/cm³ et inférieure ou égale à 1,7 g/cm³.

Dans une variante de réalisation, le composé primaire a un indice de Fluidité à chaud supérieur ou égal à 5g/10 min, en particulier supérieur ou égal à 7g/10 min et inférieur ou égal à 20g/10m min, mesuré à une température de 190°C, sous une masse de 2,16 Kg, et selon la norme ISO 1133-1, en particulier datant de 2011.

De préférence, l'indice de fluidité à chaud est supérieur ou égal à 7 g/10 min et inférieur ou égal à 17 g/10 min, en particulier supérieur ou égal à 8 g/10min et inférieur ou égal à 15 g/10 min.

Dans une variante de réalisation, au moins l'un des polybutylène(s) succinate(s), ou chacun des polybutylènes succinates, a un module en traction mesuré dans le sens machine sur un film extrudé soufflé de 20 µm d'épaisseur avec la norme ISO 527-3 :2018 supérieur ou égal à 200 MPa.

Dans une variante de réalisation, au moins l'un des polybutylène(s) succinate(s), ou chacun des polybutylènes succinates, a un Indice de Fluidité à chaud supérieur ou égale à 1 g/10 min et inférieur ou égale à 10 g/10 min, en particulier supérieur ou égal à 2 g/10 min et inférieur ou égal à 6 g/10 min, mesuré à une température de 190°C, sous une masse de 2,16 Kg, et selon la norme ISO 1133-1, en particulier datant de 2011.

En particulier, la norme ISO 1133-1, notamment datant de 2011, est intitulée « Plastics - Determination of the melt mass-flow rate (MFR) and melt volume-flow rate (MVR) of thermoplastics - Part 1: Standard method".

De préférence, le ou les polymère(s) de polybutylène succinate présente(nt) au moins l'une des caractéristiques choisies indépendamment parmi les caractéristiques suivantes :
- une densité (g/cm³) supérieure ou égale à 1,10 et inférieure ou égale à 1,30, en particulier supérieure ou égale à 1,20 et inférieure ou égale à 1,30, en particulier mesurée avec la norme ISO 1183 (notamment d'avril 2019) ; et/ou
- un Indice de Fluidité à chaud (MFR : Melt Flow Rate) mesuré à 190°C, sous une charge de 2,16 Kg, en particulier avec la norme ISO 1133 (notamment de 2011), supérieur ou égal 1 g/10min et inférieur ou égal à 10 g/10 min, en particulier supérieur ou égal à 2 g/10m min et inférieur ou égal à 6 g/10 min ; et/ou
- une température de fusion supérieure ou égale à 60°C et inférieure ou égale à 100°C, en particulier allant de 80°C à 90°C, notamment mesurée avec la norme ISO 3146 (notamment de 2022) ; et/ou
- un allongement à rupture mesuré avec la norme ISO 527-2 (%) (notamment de 2022) supérieur ou égal à 200%, en particulier supérieur ou égal à 250% ou supérieur ou égal à 300%, plus particulièrement supérieur ou égal à 350%, notamment inférieur ou égal à 600% ;
- un module en flexion (MPa) mesuré avec la norme ISO 178 (notamment de 2019) inférieur ou égal à 400MPa, en particulier supérieur ou égale à 100MPa, plus particulièrement inférieure ou égale à 300 MPa, encore plus particulièrement supérieure ou égale à 200 MPa; et/ou
- une résistance à l'impact Izod à 23°C (KJ/m²) mesurée avec la norme ISO 180 (notamment de 2019) supérieure ou égale à 20 KJ/m², de préférence supérieure ou égale à 30 KJ/m² ou à 40 KJ/m², en particulier inférieur ou égal à 80 KJ/m² ; et/ou
- une dureté Rockwell (R Scale) mesurée avec la norme ISO 2039-2 (notamment de 1987) supérieure ou égale à 30 et inférieure ou égale à 100, de préférence inférieure ou égale à 80, encore de préférence inférieure ou égale à 70 et supérieure ou égale à 40.

La présente invention a pour objet, selon un quatrième aspect, un procédé de fabrication d'une cartouche à grenailles ou à balle selon un deuxième aspect de l'invention, comprenant les étapes suivantes :
- fourniture d'une bourre pour cartouche à grenailles ou à balle selon l'une quelconque des variantes de réalisation en référence au premier aspect de l'invention et d'une cartouche comprenant une douille, ladite douille comprenant une amorce,
- placer un volume déterminé d'une charge propulsive à l'intérieur de la douille,
- placer la bourre pour cartouche à grenailles ou à balle dans la douille,
- placer un ou des projectile(s) dans la douille,
- sertir la cartouche, et
- récupérer la cartouche obtenue.

Les caractéristiques et variantes de réalisation en référence au premier aspect de l'invention peuvent être combinées entre-elles indépendamment les unes des autres, et avec l'une quelconque des variantes de réalisation en référence au second aspect ou au troisième aspect ou quatrième aspect de l'invention.

### Description des dessins

L'invention sera mieux comprise à la lecture de la description qui suit des modes de réalisation de l'invention donnés à titre d'exemples non limitatifs, en référence aux dessins annexés, dans lesquels :
[Fig. 1] la figure 1 est une représentation schématique en coupe longitudinale d'un premier exemple d'une cartouche à grenailles selon l'invention;
[Fig. 2] la figure 2 représente de manière schématique la bourre représentée à la figure 1.

### Description des modes de réalisation

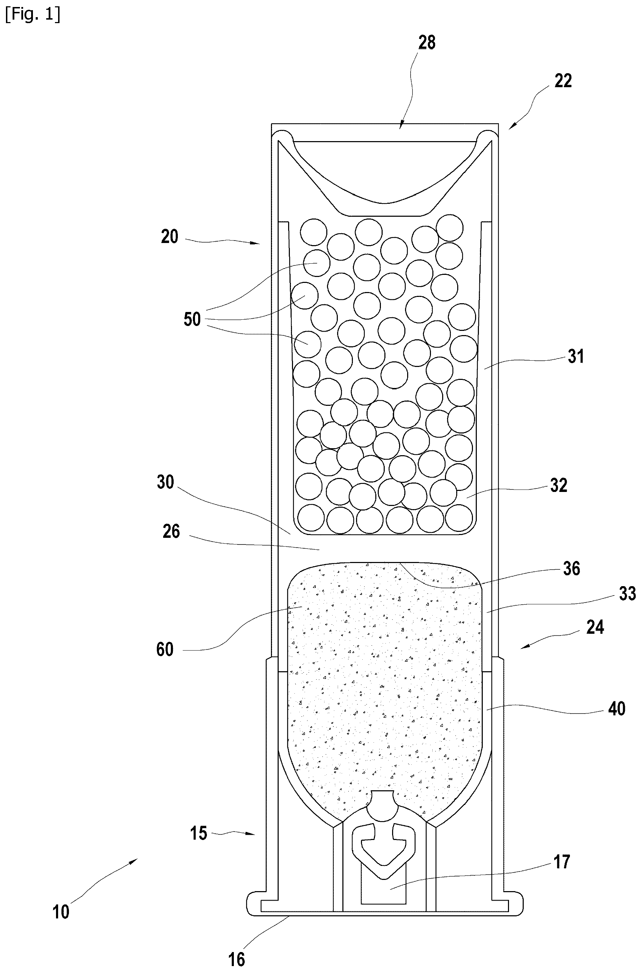

La cartouche 10 représentée sur la figure 1 comprend une douille 20 ayant une extrémité distale 22 et une extrémité proximale 24, ladite douille 20 recevant dans son volume intérieur 26 une bourre 30 selon l'invention. La cartouche 10 comprend en outre un culot 15 et une amorce 17 montée sur le fond 16 du culot 15. Le culot 15 est monté sur l'extrémité proximale 24 ouverte de la douille 20 et obture celle-ci. La cartouche 10 comprend un renfort 40 en forme de coupe ouverte solidarisé avec l'amorce 15 et recevant une partie de la charge propulsive 50. L'extrémité distale 22 de la douille 20 est repliée sur elle-même afin de la fermer et forme ainsi une fermeture plissée 28.

Avantageusement, la bourre 30 comprend une première partie 31 ayant une extrémité ouverte, et comprenant un premier logement 32 arrangé pour recevoir un volume déterminé en projectile(s), ici de la grenaille 50, et une seconde partie 33 ayant une extrémité ouverte, et comprenant un second logement 34 arrangé pour recevoir un volume déterminé d'au moins une charge propulsive 60.

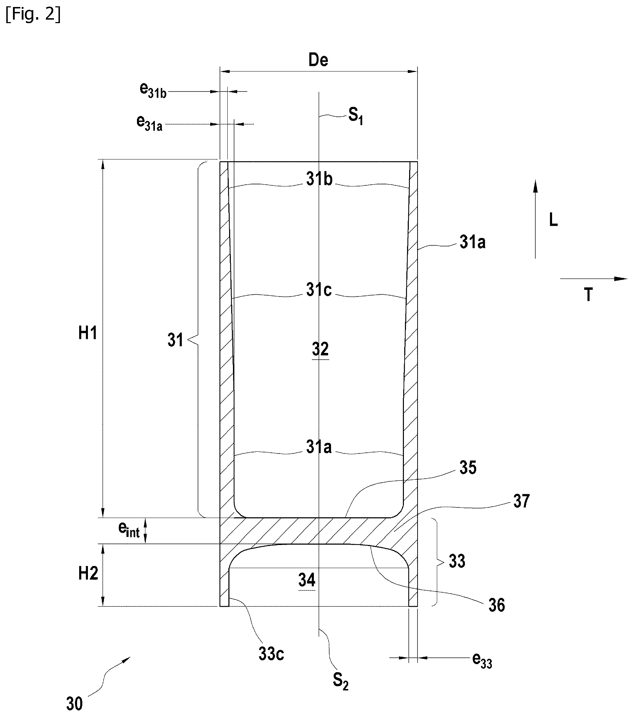

Avantageusement, la bourre 30 est une pièce plastique monobloc. La bourre 30 est représentée de manière détaillée sur la figure 2.

Avantageusement, la hauteur H1 de la première partie 31 est supérieure ou égale à 5 fois, en particulier supérieure ou égale à 6 fois, la hauteur H2 de la seconde partie 32. Par exemple, H1 est d'environ 33,00 mm et H2 est d'environ 5,50 mm.

Avantageusement, le fond 35 de la première partie 31 est sensiblement plan.

Avantageusement, le fond 36 de la seconde partie 33 est sensiblement vouté, i.e en arc.

Avantageusement, l'épaisseur eint de la paroi de séparation 37 séparant le fond 35 de la première partie 31 du fond 36 de la seconde partie 33 est supérieure ou égale à 2,00 mm, en particulier supérieure ou égale à 2,50 mm à +/- 10% près.

La première partie 31 comprend une partie proximale 31a et une partie distale 31b, et l'épaisseur de la paroi 31c, notamment de la paroi radiale 31c, de la première partie 31 est décroissante de sa partie proximale 31a vers sa partie distale 31b.

Par exemple, l'épaisseur e31a de la paroi 31c de la première partie 31 dans sa partie proximale 31a est de 1,16 mm tandis que l'épaisseur e31b de la paroi 31c de la première partie 31 dans sa partie distale 31b est de 0,60 mm. L'épaisseur de la paroi 31c de la première partie 31 décroit ainsi sensiblement de moitié progressivement entre sa partie proximale 31a et sa partie distale 31b.

Avantageusement, le diamètre externe De de la bourre 30 varie selon le calibre de l'arme, par exemple il peut être de 18 mm.

Avantageusement, l'épaisseur e33 de la paroi 33c de la seconde partie 33 est sensiblement constante, par exemple de l'ordre de 0,57 mm.

Avantageusement, la bourre 30 comprend un axe longitudinal L selon lequel les première et seconde parties (31,33) s'étendent, et un axe transversal T sensiblement perpendiculaire à l'axe L.

Avantageusement, la première partie 31 est une jupe comprenant des fentes longitudinales (non visibles), en particulier comprenant de 2 à 6 fentes longitudinales, en particulier 4 fentes longitudinales réparties de manière sensiblement équidistante. De préférence, une fente longitudinale débouche sur l'extrémité ouverte de la partie distale 31 et s'étend à partir de cette dernière sur au moins la moitié de la hauteur H1, notamment sur au moins 2/3 de la hauteur H1.

Avantageusement, l'ouverture d'accès au logement 32 de la première partie 31 est opposée à l'ouverture d'accès au logement 34 de la seconde partie 33.

Avantageusement, les première et seconde parties (31,33) sont alignées selon l'axe longitudinal de la bourre 30.

Avantageusement, l'axe de symétrie centrale S1 de la première partie 31 est confondue avec l'axe de symétrie centrale S2 de la seconde partie 33, l'axe de symétrie centrale S1 ou S2 étant parallèle à l'axe longitudinal L de la bourre 30.

Avantageusement, la bourre 30 est fabriquée en mettant en œuvre une étape d'injection moulage à l'aide d'un moule comprenant une empreinte de moulage de ladite bourre 30 sans fentes longitudinales. Avantageusement, un mélange comprenant environ 70% à 90% en masse d'un ou plusieurs polymère(s) de polybutylène succinate (PBS), et environ 6,5% à 30% en masse de carbonate de calcium, en particulier d'un carbonate de calcium traité en surface, notamment d'un composé primaire à base de carbonate de calcium, est extrudé sur une vis à plusieurs zones de chauffage, par exemple 5 zones de chauffage distinctes, puis le mélange fondu est injecté dans le moule. L'homme du métier sait adapter les paramètres de chauffage et d'injection du mélange pour l'obtention d'une pièce moulée par injection. On laisse refroidir le mélange injecté, puis on démoule la pièce injectée formant une bourre intermédiaire. On vient ensuite réaliser les fentes longitudinales dans la première partie dans une étape de finition mais sans ajouter d'autre(s) pièce(s) à la bourre intermédiaire pour finaliser cette dernière et obtenir la bourre selon l'invention, par exemple la bourre 30.

Les dimensions précises indiquées pour la bourre et la cartouche sont ici données à titre d'exemples non limitatifs pour un volume de projectile(s) déterminé, i.e de 32g de grenailles environ et un volume de charge propulsive déterminé. Ces dimensions varient en fonction du volume de projectile(s), par exemple de 35g ou de 28g, du volume de la charge propulsive, et du diamètre ou calibre de l'arme. Ces dimensions restent cependant de préférence dans les mêmes proportions s'agissant du ratio des hauteurs H1 et H2, ou encore de l'épaisseur de la paroi de séparation ou encore de la variabilité de l'épaisseur de la paroi radiale de la première partie de la bourre ou de la constance de l'épaisseur de la paroi radiale de la seconde partie de la bourre.

### Description d'exemples comparatifs et selon l'invention

Des cartouches d'essais sont préparées avec 32g de grenaille, les cartouches d'essais correspondent à celle décrite sur les figures 1 et 2 mais sans la dégressivité de l'épaisseur de la paroi 31c, sans l'épaisseur eint plus élevée (ici pour les exemples comparatifs eint est d'environ 1 mm), et sans le fond incurvée de la seconde partie 33. Ces derniers paramètres structurels étant présents uniquement sur les essais selon l'invention car ils ont été apportés pour améliorer les performances de la bourre selon l'invention.

### Exemple comparatif 1 :

Une bourre comprend 32g de grenailles, avec 100% en masse de polybutylène succinate (PBS), notamment du grade FZ71 (PM/PB) commercialisé par la société Biochem Company Ltd, est injectée en une seule pièce, 4 fentes longitudinales sont réalisées. Le module en flexion (mesuré avec la norme ISO 178) est d'environ 630 MPa. La bourre est placée dans une cartouche d'essai telle que décrite ci-avant, et des essais de tir sont effectués. La vitesse du tir est en moyenne de 402,9 m/s, avec un mini à 389 m/s et un maxi à 433,5 m/s. La pression exercée et mesurée est d'environ 698,4 bars avec un mini à 545,1 bars et un maxi à 948 bars. L'écart-type de vitesse mesuré sur V1 (m/s) est de 14,5 m/s alors que celui que les inventeurs cherchent à atteindre est d'environ 6 m/s au plus, et l'écart-type de pression P1 (bars) est de 130 bars alors que les inventeurs cherchent à atteindre 60 bars environ et au plus. De plus, la bourre casse/se fragmente en sortie du canon de l'arme. La bourre ne satisfait donc pas les normes édictées par la CIP.

### Exemple comparatif 2 :

Le même essai que l'exemple comparatif 1 est effectué à la seule différence que le polybutylène succinate est remplacé par un grade plus souple FD92 (PM/PB) de la société BioChem Company Ltd, en particulier ayant un module en flexion (ISO 178) d'environ 250 MPa.

L'écart-type de vitesse mesuré sur V1 (m/s) est de 8,6 m/s, et l'écart-type de pression P1 (bars) est de 57,5 bars. De plus, la bourre ne se fragmente pas en sortie du canon de l'arme. Néanmoins, l'écart -type sur la vitesse V1 est encore trop élevé.

### Exemple selon l'invention 1:

Le même essai que l'exemple comparatif 2 est effectué à la différence que le mélange injecté comprend 10% en masse d'un composé primaire comprenant du carbonate de calcium, en particulier comprenant un carbonate de calcium traité en surface, tel que le Carbomax^{®}Bio commercialisé par la société Cabamix^{®}, et 90% en masse du grade de PBS FD92 (PM/PB) utilisé dans l'exemple.

Le composé primaire comprend 65% en masse de carbonate de calcium traité en surface, tel que le carbonate de calcium Smartfill^{®} OM 55 commercialisé par la société OMYA^{®}., en mélange avec environ 35% en masse d'un polyester aliphatique biodégradable, notamment du PBS, de préférence du même grade que celui testé et commercialisé ar BioChem Company Ltd.

L'écart-type sur pression P1 (bars) reste aux environ de 60 bars. La bourre ne se fragmente pas lors du tir dans le canon ou en sortie de ce dernier. On observe une diminution de l'écart-type sur la vitesse d'environ 11% et une réduction du temps d'injection.

### Exemple selon l'invention 2:

Le même essai que l'exemple selon l'invention 1 est effectué à la différence que le mélange injecté comprend 20% en masse dudit composé primaire comprenant du carbonate de calcium, en particulier le Carbomax^{®}Bio commercialisé par la société Cabamix^{®}, et 80% en masse du grade de PBS FD92 (PM/PB) utilisé dans l'exemple comparatif 2.

L'écart-type sur pression P1 (bars) reste aux environs de 60 bars. La bourre ne se fragmente pas lors du tir dans le canon ou en sortie de ce dernier. On observe une diminution de l'écart-type sur la vitesse d'environ 22% et une réduction du temps d'injection très significative.

### Exemple invention 3 :

Le même essai que l'exemple selon l'invention 1 est effectué à la différence que le mélange injecté comprend 30% en masse du composé primaire à base de carbonate de calcium, en particulier le Carbomax^{®}Bio commercialisé par la société Cabamix^{®}, et 70% en masse du grade de PBS FD92 (PM/PB) utilisé dans l'exemple comparatif 2. L'écart-type sur pression P1 (bars) reste aux environs de 60 bars. La bourre ne se fragmente pas lors du tir dans le canon ou en sortie de ce dernier. On observe un écart-type sur la vitesse maintenue à environ 8 m/s (donc pas d'amélioration par rapport à l'exemple comparatif 2) et une réduction du temps d'injection.

### Exemple comparatif 3:

Le même essai que l'exemple selon l'invention 1 est effectué à la différence que le mélange injecté comprend 40% en masse du composé primaire à base de carbonate de calcium, en particulier le Carbomax^{®}Bio commercialisé par la société Cabamix^{®}, et 60% en masse du grade de PBS FD92 (PM/PB) utilisé dans l'exemple comparatif 2. L'écart-type sur pression P1 (bars) reste aux environs de 60 bars. La bourre ne se fragmente pas lors du tir dans le canon ou en sortie de ce dernier. On observe une détérioration de l'écart-type sur la vitesse d'environ 10% comparativement à celui obtenu pour l'exemple comparatif 2, et un temps d'injection similaire à celui de l'exemple comparatif 2. Il n'y a donc pas d'améliorations des performances balistiques de la bourre, ni du procédé d'injection.

La biodégradabilité a été mesurée sur la bourre de l'exemple 2 selon l'invention par enfouissement dans la terre selon la norme ISO 17556 datant de 2019. On observe que 90% en masse de la bourre est biodégradée au terme de 151 jours.

La biodégradabilité a été également mesurée sur la bourre de l'exemple 2 selon l'invention en milieu aqueux selon la norme ISO 14851 datant de 2019. On observe que 90% en masse de la bourre est biodégradée au terme de 84 jours.

La bourre selon l'invention permet ainsi d'offrir des performances balistiques améliorées et régulières, tout en étant biodégradable.

La bourre selon l'invention peut être également obtenue par un procédé d'injection-moulage simple et dont la productivité est même améliorée concernant la durée de l'injection réduite d'environ 22%. De plus, la bourre selon l'invention ne nécessite pas de conditions de stockage particulières, ni d'ensachage pour la préserver de l'humidité.

## Revendications

1. Bourre (30) au moins en partie biodégradable pour cartouche à grenailles ou à balle (10) comprenant une première partie (31) ayant une extrémité ouverte et comprenant un premier logement (32) arrangé pour recevoir un volume déterminé en projectile(s) (50), et une seconde partie (33) ayant une extrémité ouverte et comprenant un second logement (34) arrangé pour recevoir un volume déterminé d'au moins une charge propulsive (60), en ce que ladite bourre (30) est une pièce plastique monobloc, en ce que ladite bourre (30) comprend un ou plusieurs polymère(s) dont un ou plusieurs polymère(s) de polybutylène succinate, en ce que ladite bourre (30) comprend du carbonate de calcium, **caractérisée en ce que** la fraction massique du ou desdits polymère(s) dans ladite bourre (30) est supérieure ou égale à 70%, **en ce que** la fraction massique en carbonate de calcium dans ladite bourre (30) est supérieure ou égale à 6,5%, et **en ce que** le ou les polymère(s) de polybutylène succinate est/sont majoritaire(s) en masse dans ladite bourre (30).

2. Bourre (30) selon la revendication **1, caractérisée en ce que** la fraction massique en polymère(s) est supérieure ou égale à 70% et inférieure ou égale à 90%.

3. Bourre (30) selon l'une ou l'autre des revendications **1 et 2, caractérisée en ce que** le ou les polymère(s) de polybutylène succinate représente(nt) au moins 70% en masse de la bourre (30).

4. Bourre (30) selon l'une quelconque des revendications **1 à 3, caractérisée en ce que** le carbonate de calcium comprend du carbonate de calcium traité en surface avec un mélange d'acide(s) (poly)carboxylique(s) et/ou d'un ou des anhydride(s) acide(s) du ou desdits acide(s) (poly)carboxylique(s), et/ou d'un ou des sel(s) du ou desdits acide(s) (poly)carboxylique(s) et/ou d'un ou des sel(s) dudit ou desdits anhydride(s) acide(s).

5. Bourre (30) selon l'une quelconque des revendications **1 à 4, caractérisée en ce que** la bourre a une densité allant de 1,20 g/cm³ à 1,50 g/cm³.

6. Bourre (30) selon l'une quelconque des revendications **1 à 5, caractérisée en ce que** la première partie (31) est une jupe comprenant des fentes longitudinales.

7. Bourre (30) selon l'une quelconque des revendications **1 à 6, caractérisée en ce que** la première partie (31) comprend une partie proximale (31a) et une partie distale (31b), et **en ce que** l'épaisseur de la paroi (31c) de la première partie (31) est décroissante de sa partie proximale (31a) vers sa partie distale (31b).

8. Bourre (30) selon l'une quelconque des revendications **1 à 7, caractérisée en ce que** la bourre (30) comprend une paroi de séparation (37) séparant un fond (35) de la première partie (31) de la bourre (30) d'un fond (36) de la seconde partie (33)de la bourre (30), ladite paroi de séparation (37) ayant une épaisseur (eint) supérieure ou égale à 2,00 mm.

9. Bourre (30) selon l'une quelconque des revendications **1 à 8, caractérisée en ce que** la hauteur (H1) de la première partie (31) est supérieure ou égale à 5 fois la hauteur (H2) de la seconde partie (33).

10. Cartouche à grenailles ou à balle (10) comprenant une bourre (30) au moins en partie biodégradable pour cartouche à grenailles ou à balle selon l'une quelconque des revendications **1 à 9.**

11. Procédé de fabrication d'une bourre (30) au moins en partie biodégradable pour cartouche à grenailles ou à balle **caractérisé en ce qu'**il comprend les étapes ci-après:
- i) préparation d'un mélange comprenant un ou plusieurs polymère(s) dont un ou plusieurs polymère(s) de polybutylène succinate, et comprenant en outre un composé primaire comprenant du carbonate de calcium, la fraction massique du ou desdits polymère(s) dans ledit mélange est supérieure ou égale à 70%, la fraction massique en carbonate de calcium dans ledit mélange est supérieure ou égale à 6,5%, et le ou les polymère(s) de polybutylène succinate est/sont majoritaire(s) en masse dans ledit mélange ;
- ii) mise en œuvre en chauffant ledit mélange issu de l'étape i) dans une seule étape de moulage pour le moulage d'une bourre primaire pour cartouche à grenailles ou à balle avec un ensemble de moule comprenant une empreinte de bourre primaire pour cartouche à grenailles ou à balle ;
- iii) récupération de la bourre primaire pour cartouche moulée dans ledit mélange ;
- éventuellement une étape iv) de préparation d'une ou plusieurs fente(s) longitudinale(s) dans la première partie de la bourre primaire pour cartouche.

12. Procédé selon la revendication **11, caractérisé en ce que** le ou les polymère(s) de polybutylène succinate représente(nt) au moins 70% en masse du mélange de l'étape i).

13. Procédé selon l'une ou l'autre des revendications **11 et 12, caractérisé en ce que** le ou les polymère(s) de polybutylène succinate a, ou ont chacun, un module en flexion, mesuré avec la norme ISO 178:2019, inférieur ou égal à 400 MPa.

14. Procédé de fabrication selon l'une quelconque des revendications **11 à 13, caractérisé en ce que** le ou les polymère(s) de polybutylène succinate a, ou ont chacun, un Indice de Fluidité à chaud supérieur ou égale à 1 g/10 min et inférieur ou égale à 10 g/10 min, mesuré à une température de 190°C, sous une masse de 2,16 Kg, et selon la norme ISO 1133 :2011.

15. Procédé de fabrication selon l'une quelconque des revendications **11 à 14, caractérisé en ce que** le carbonate de calcium du composé primaire comprend du carbonate de calcium traité en surface avec un mélange d'acide(s) (poly)carboxylique(s) et/ou d'un ou des anhydride(s) acide(s) du ou desdits acide(s) (poly)carboxylique(s), et/ou d'un ou des sel(s) du ou desdits acide(s) (poly)carboxylique(s) et/ou d'un ou des sel(s) dudit ou desdits anhydride(s) acide(s), et **en ce que** le composé primaire comprend un ou plusieurs polymère(s) biodégradable(s) mélangé(s) avec ledit carbonate de calcium.

16. Procédé de fabrication d'une cartouche à grenailles ou à balle (10) selon la revendication **10, caractérisé en ce qu'**il comprend les étapes suivantes:
- fourniture d'une bourre (30) pour cartouche selon l'une quelconque des revendications 1 à 9 et d'une cartouche (10) comprenant une douille (20), ladite douille (20) comprenant une amorce (17),
- placer un volume déterminé d'une charge propulsive (50) à l'intérieur de la douille (20),
- placer la bourre (30) pour cartouche à grenailles ou à balle dans la douille (20),
- placer un ou des projectile(s) (50) dans la douille (20),
- sertir la cartouche (10), et
- récupérer la cartouche obtenue (10).

## Patentansprüche

1. Becherpfropfen (30), der zumindest teilweise biologisch abbaubar ist, für Schrot- oder Kugelpatronen (10) umfassend einen ersten Abschnitt (31), der ein offenes Ende aufweist und ein erstes Gehäuse (32) umfasst, das angeordnet ist, um ein bestimmtes Volumen an Geschoss(en) (50) aufzunehmen, und einen zweiten Abschnitt (33), der ein offenes Ende aufweist und ein zweites Gehäuse (34) umfasst, das angeordnet ist, um ein bestimmtes Volumen von mindestens einer Treibladung (60) aufzunehmen, dass der Becherpfropfen (30) ein einstückiges Kunststoffteil ist, dass der Becherpfropfen (30) ein oder mehrere Polymere umfasst, darunter ein oder mehrere Polybutylensuccinatpolymere, dass der Becherpfropfen (30) Calciumcarbonat umfasst, **dadurch gekennzeichnet, dass** der Massenanteil des oder der Polymeres in dem Becherpfropfen (30) größer als oder gleich wie 70 % ist, dass der Massenanteil an Calciumcarbonat in dem Becherpfropfen (30) größer als oder gleich wie 6,5 % ist, und dass das oder die Polybutylensuccinatpolymere die Massenmehrheit in dem Becherpfropfen (30) sind.

2. Becherpfropfen (30) nach Anspruch 1, **dadurch gekennzeichnet, dass** der Massenanteil an Polymer(en) größer als oder gleich wie 70 % und kleiner als oder gleich wie 90 % ist.

3. Becherpfropfen (30) nach dem einem oder dem anderen der Ansprüche 1 und 2, **dadurch gekennzeichnet, dass** das oder die Polybutylensuccinatpolymere mindestens 70 Masse-% des Becherpfropfens (30) darstellen.

4. Becherpfropfen (30) nach einem der Ansprüche 1 bis 3, **dadurch gekennzeichnet, dass** das Calciumcarbonat Calciumcarbonat umfasst, das mit einem Gemisch aus (Poly)carbonsäure(n) und/oder Säureanhydrid(en) der (Poly)carbonsäure(n) und/oder Salz(en) der (Poly)carbonsäure(n) und/oder Salz(en) des (der) Säureanhydrid(e) oberflächenbehandelt ist.

5. Becherpfropfen (30) nach einem der Ansprüche 1 bis 4, **dadurch gekennzeichnet, dass** der Becherpfropfen eine Dichte in einem Bereich von 1,20 g/cm³ bis 1,50 g/cm³ aufweist.

6. Becherpfropfen (30) nach einem der Ansprüche 1 bis 5, **dadurch gekennzeichnet, dass** der erste Abschnitt (31) eine Schürze ist, die Längsschlitze umfasst.

7. Becherpfropfen (30) nach einem der Ansprüche 1 bis 6, **dadurch gekennzeichnet, dass** der erste Abschnitt (31) einen proximalen Abschnitt (31a) und einen distalen Abschnitt (31b) umfasst, und dass die Stärke der Wand (31c) des ersten Abschnitts (31) von seinem proximalen Abschnitt (31a) zu seinem distalen Abschnitt (31b) hin abnimmt.

8. Becherpfropfen (30) nach einem der Ansprüche 1 bis 7, **dadurch gekennzeichnet, dass** der Becherpfropfen (30) eine Trennwand (37) umfasst, die einen Boden (35) des ersten Abschnitts (31) des Becherpfropfens (30) von einem Boden (36) des zweiten Abschnitts (33) des Becherpfropfens (30) trennt, wobei die Trennwand (37) eine Stärke (eint) größer als oder gleich wie 2,00 mm aufweist.

9. Becherpfropfen (30) nach einem der Ansprüche 1 bis 8, **dadurch gekennzeichnet, dass** die Höhe (HI) des ersten Abschnitts (31) größer als oder gleich wie das 5-fache der Höhe (H2) des zweiten Abschnitts (33) ist.

10. Schrot- oder Kugelpatrone (10) umfassend einen Becherpfropfen (30), der zumindest teilweise biologisch abbaubar ist, für Schrot- oder Kugelpatrone nach einem der Ansprüche 1 bis 9.

11. Verfahren zur Herstellung eines Becherpfropfens (30), der zumindest teilweise biologisch abbaubar ist, für Schrot- oder Kugelpatrone, **dadurch gekennzeichnet, dass** es die folgenden Schritte umfasst:
- i) Herstellen eines Gemischs, umfassend ein oder mehrere Polymere, darunter ein oder mehrere Polybutylensuccinatpolymere, und ferner umfassend eine primäre Verbindung, umfassend Calciumcarbonat, wobei der Massenanteil des Polymers oder der Polymere in dem Gemisch größer als oder gleich wie 70 % ist, der Massenanteil an Calciumcarbonat in dem Gemisch größer als oder gleich wie 6,5 % ist und das oder die Polybutylensuccinatpolymere die Massenmehrheit in dem Gemisch darstellen;
- ii) Verarbeiten durch Erhitzen Gemischs von Schritt i) in einem einzelnen Formschritt zum Formen eines primären Becherpfropfens für Schrot- oder Kugelpatrone mit einer Formeinheit, umfassend eine primäre Becherpfropfenvertiefung für Schrot- oder Kugelpatrone;
- iii) Entnehmen des primären Becherpfropfens für Patrone, der in dem Gemisch geformt wird;
- optional einen Schritt iv) eines Vorbereitens eines oder mehrerer Längsschlitze in dem ersten Abschnitt des primären Becherpfropfens für Patrone.

12. Verfahren nach Anspruch 11, **dadurch gekennzeichnet, dass** das oder die Polybutylensuccinatpolymere mindestens 70 Masse-% des Gemischs von Schritt i) darstellen.

13. Verfahren nach einem der Ansprüche 11 und 12, **dadurch gekennzeichnet, dass** das oder die Polybutylensuccinatpolymere einen Biegemodul, gemessen nach ISO 178:2019, von 400 MPa oder weniger aufweisen.

14. Herstellungsverfahren nach einem der Ansprüche 11 bis 13, **dadurch gekennzeichnet, dass** das oder die Polybutylensuccinatpolymere jeweils einen Schmelzindex von größer als oder gleich wie 1 g/10 min und kleiner als oder gleich wie 10 g/10 min, gemessen bei einer Temperatur von 190 °C, unter einer Masse von 2,16 kg und gemäß ISO 1133:2011, aufweisen.

15. Herstellungsverfahren nach einem der Ansprüche 11 bis 14, **dadurch gekennzeichnet, dass** das Calciumcarbonat der primären Verbindung Calciumcarbonat umfasst, das mit einem Gemisch aus (Poly)carbonsäure(n) und/oder Säureanhydrid(en) der (Poly)carbonsäure(n) und/oder Salz(en) der (Poly)carbonsäure(n) und/oder Salz(en) des (der) Säureanhydrid(e) oberflächenbehandelt ist, und dass die primäre Verbindung ein oder mehrere biologisch abbaubares Polymere umfasst, die mit dem Calciumcarbonat gemischt sind.

16. Herstellungsverfahren einer Schrot- oder Kugelpatrone (10) nach Anspruch 10, **dadurch gekennzeichnet, dass** es die folgenden Schritte umfasst:
- Bereitstellen eines Becherpfropfens (30) für Patrone nach einem der Ansprüche 1 bis 9 und einer Patrone (10), die eine Hülse (20) umfasst, die Hülse (20) umfassend einen Zünder (17),
- Platzieren eines bestimmten Volumens einer Treibladung (50) im Inneren der Hülse (20),
- Platzieren des Becherpfropfen (30) für Schrot- oder Kugelpatronen in der Hülse (20),
- Platzieren eines oder mehrerer Geschosse (50) in der Hülse (20),
- Crimpen der Patrone (10), und
- Entnehmen der erlangten Patrone (10).

## Claims

1. An at least partially biodegradable wadding (30) for a shot or bullet cartridge (10) comprising a first portion (31) having an open end and comprising a first recess (32) arranged to receive a determined volume of projectile(s) (50), and a second portion (33) having an open end and comprising a second recess (34) arranged to receive a determined volume of at least one propellant charge (60), in that said wadding (30) is a single plastic piece, in that said wadding (30) comprises one or more polymer(s) including one or more polybutylene succinate polymer(s), in that said wadding (30) comprises calcium carbonate, **characterised in that** the mass fraction of said one or more polymer(s) in said wadding (30) is greater than or equal to 70%, **in that** the mass fraction of calcium carbonate in said wadding (30) is greater than or equal to 6.5%, and **in that** the one or more polybutylene succinate polymer(s) is/are the majority by mass in said wadding (30).

2. The wadding (30) according to claim **1, characterised in that** the mass fraction of polymer(s) is greater than or equal to 70% and less than or equal to 90%.

3. The wadding (30) according to one or other of claims **1 and 2, characterised in that** the one or more polybutylene succinate polymer(s) represent(s) at least 70% by mass of the wadding (30).

4. The wadding (30) according to any one of claims **1 to 3, characterised in that** the calcium carbonate comprises calcium carbonate surface treated with a mixture of (poly)carboxylic acid(s) and/or one or more acid(s) anhydride(s) of said one or more (poly)carboxylic acid(s), and/or one or more salt(s) of said one or more (poly)carboxylic acid(s) and/or one or more salt(s) of said acid(s) anhydride(s).

5. The wadding (30) according to any one of claims **1 to 4, characterised in that** the wadding has a density ranging from 1.20 g/cm³ to 1.50 g/cm³.

6. The wadding (30) according to any one of claims **1 to 5, characterised in that** the first portion (31) is a skirt comprising longitudinal slots.

7. The wadding (30) according to any one of claims **1 to 6, characterised in that** the first portion (31) comprises a proximal portion (31a) and a distal portion (31b), and **in that** the thickness of the wall (31c) of the first portion (31) is decreasing from its proximal portion (31a) towards its distal portion (31b).

8. The wadding (30) according to any one of claims **1 to 7, characterised in that** the wadding (30) comprises a separation wall (37) separating a bottom (35) of the first portion (31) of the wadding (30) from a bottom (36) of the second portion (33) of the wadding (30), said separation wall (37) having a thickness (eint) greater than or equal to 2.00 mm.

9. The wadding (30) according to any one of claims **1 to 8, characterised in that** the height (H1) of the first portion (31) is greater than or equal to 5 times the height (H2) of the second portion (33).

10. A shot or bullet cartridge (10) comprising an at least partially biodegradable wadding (30) for a shot or bullet cartridge according to any one of claims **1 to 9.**

11. A method for producing an at least partially biodegradable wadding (30) for a shot or bullet cartridge **characterised in that** it comprises the following steps:
- i) preparing a mixture comprising one or more polymer(s) including one or more polybutylene succinate polymer(s), and further comprising a primary compound comprising calcium carbonate, the mass fraction of said one or more polymer(s) in said mixture is greater than or equal to 70%, the mass fraction of calcium carbonate in said mixture is greater than or equal to 6.5%, and the one or more polybutylene succinate polymer(s) is/are the majority by mass in said mixture;
- ii) heating said mixture originating from step i) in a single moulding step for moulding a primary wadding for a shot or bullet cartridge with a mould set comprising an imprint of the primary wadding for a shot or bullet cartridge;
- iii) recovering the primary wadding for a cartridge moulded in said mixture;
- optionally, a step iv) of preparing one or more longitudinal slots in the first portion of the primary wadding for a cartridge.

12. The method according to claim **11, characterised in that** the one or more polybutylene succinate polymer(s) represent(s) at least 70% by mass of the mixture of step i).

13. The method according to one or other of claims **11 and 12, characterised in that** the one or more polybutylene succinate polymer(s) has, or each have, a flexural modulus, measured using standard ISO 178:2019, less than or equal to 400 MPa.

14. The production method according to any one of claims **11 to 13, characterised in that** the one or more polybutylene succinate polymer(s) has, or each have, a melt flow rate greater than or equal to 1 g/10 min and less than or equal to 10 g/10 min, measured at a temperature of 190°C, under a mass of 2.16 kg, and according to standard ISO 1133:2011.

15. The production method according to any one of claims **11 to 14, characterised in that** the calcium carbonate of the primary compound comprises calcium carbonate surface treated with a mixture of (poly)carboxylic acid(s) and/or one or more acid(s) anhydride(s) of said one or more (poly)carboxylic acid(s), and/or one or more salt(s) of said one or more (poly)carboxylic acid(s) and/or one or more salt(s) of said one or more acid(s) anhydride(s), and **in that** the primary compound comprises one or more biodegradable polymer(s) mixed with said calcium carbonate.

16. The method for producing a shot or bullet cartridge (10) according to claim **10, characterised in that** it comprises the following steps:
- providing a wadding (30) for a cartridge according to any one of claims 1 to 9 and a cartridge (10) comprising a casing (20), said casing (20) comprising a primer (17),
- placing a determined volume of a propellant charge (50) inside the casing (20),
- placing the wadding (30) for a shot or bullet cartridge in the casing (20),
- placing one or more projectile(s) (50) in the casing (20),
- crimping the cartridge (10), and
- recovering the cartridge obtained (10).
